Europäisches Patentamt

European Patent Office

Office européen des brevets

(11) Publication number: **0 103 121**
A1

## EUROPEAN PATENT APPLICATION

(21) Application number: 83107301.0

(22) Date of filing: 25.07.83

(51) Int. Cl.³: **H 01 B 3/44**, C 08 L 23/08

(30) Priority: 29.07.82 IT 2262282

(43) Date of publication of application: 21.03.84
Bulletin 84/12

(84) Designated Contracting States: DE FR GB

(71) Applicant: SOCIETA' CAVI PIRELLI S.p.A., Piazzale
Cadorna 5, I-20123 Milano (IT)

(72) Inventor: Zaopo, Antonio, Via Cadibona, 17, I-Milan (IT)
Inventor: Broggi, Fabrizio, Via Sardegna, 32,
I-Buguggiate (Varese) (IT)

(74) Representative: Dr. Elisabeth Jung Dr. Jürgen
Schirdewahn Dipl.-Ing. Claus Gernhardt, P.O.
Box 40 14 68 Clemensstrasse 30,
D-8000 München 40 (DE)

(54) Material for insulations and sheaths of electric power cables, and electric power cables provided with insulations and sheaths made of said material.

(57) The invention provides power cable insulations and sheaths and conductor coverings constituted from a compound based on a copolymer whose monomers are ethylene and an ester containing a double bond, magnesium hydroxide being present in said compound.

The invention refers, moreover, to cables provided with insulations and sheaths made from the above cited material.

EP 0 103 121 A1

# MATERIAL FOR INSULATIONS AND SHEATHS OF ELECTRIC POWER CABLES, AND ELECTRIC POWER CABLES PROVIDED WITH INSULATIONS AND SHEATHS MADE OF SAID MATERIAL

The present invention refers to a material for insulations and/or sheaths of electric power cables, and it refers, moreover, to electric power cables provided with an insulation and/or a sheath made from the material which forms the object of the present invention.

Moreover, the present invention refers to a material suited for covering conductors and acting both as an insulation and a sheath, and to conductors provided with said covering.

One problem that rises in electric power cables in general is that of having an insulation and/or a sheath or a covering both as an insulation and a sheath, which is endowed with non-flame-propagating characteristcs in the presence of a fire, and which possesses besides this characteristic, also the properties of emitting fumes that are as transparent as possible, and which does not originate any poisonous gases during a fire.

For solving the above problem in known cables there was taken recourse to the presence of aluminium-hydroxide in the compound that forms an insulation, a sheath or a covering acting both as an insulation and a sheath.

These known cables do not solve, in any really efficacious manner, the problem of not propagating the flames, should there be a break out of fire, although some positive results have duly been obtained as far as regards the forming of transparent fumes and the absence of toxic gases.

One aim of the present invention is to solve in an efficient way and with regard to the materials used for forming insulations, sheaths and coverings that serve as insulations and sheaths for electric power cables, the problem of preventing any flame-propagation, with improving at the same time the properties of emitting transparent fumes and of not emitting toxic gases, while also improving the dielectric properties of said materials themselves.

Consequently, it is also one aim of the present invention to solve in electric power cables provided with insulations and/or sheaths or coverings that act as insulations and sheaths, the problem of preventing, in an efficient manner, any flame-propagation, with improving at the same time the capacity for emitting only transparent fumes, with avoiding any formation of toxic gases, and also with improving the dielectric properties of the insulations and of the coverings acting as insulations and sheaths for said cables.

What forms one object of the present invention is a material for insulations and sheaths of electric cables and for conductor coverings that serve both as an insulation and a sheath, characterized by the fact of comprising a compound based on a copolymer, the monomers of which are ethylene and an ester containing at least one double bond, in which compound there is present magnesium hydroxide as one component thereof.

Another object of the present invention is an electric cable comprising a conductor and at least one insulation or a covering serving as an insulation and a sheath, characterized by the fact that said insulation or covering is a copolymer base compound, the monomers of which are ethylene and an ester containing a double bond, which compound has magnesium hydroxide as one component thereof.

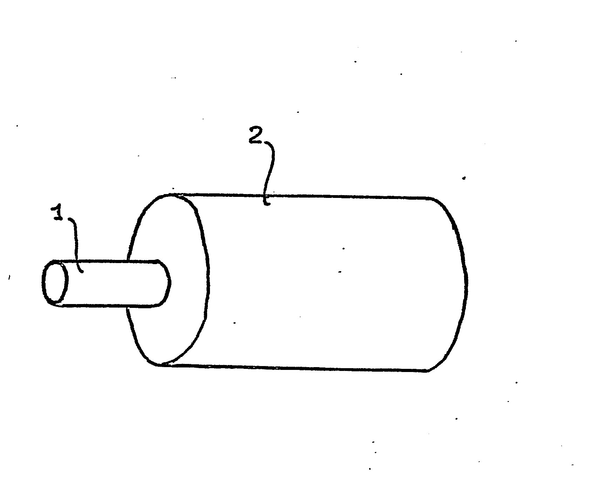

The present invention will be better understood from the following detailed description, made solely by way of non limiting example, with respect to the figure of the attached drawing, wherein there is shown in a perspective view (with parts removed)   a length of an electric cable according to the invention. According to the more general idea of solution of the present invention, it comprises a material for the formation of insulations and/or sheaths and of coverings serving both as an insulation and a sheath of electric cables consisting of a compound based on a copolymer, the monomers of which are ethylene and an ester containing at least one double bond, in which compound there is present magnesium hydroxide as a main component hereof.

Still according to the more general idea of solution of the present invention, it comprises an electric cable provided with an insulation and/or a sheath or a covering  that serves both as an insulation and a sheath, made from the above stated materials.

Moreover, still according to the more general idea of solution of the present invention, the magnesium hydroxide being present in the compound for forming the insulation and sheath of electric cables and conductor coverings, is present in a quantity comprised between 75 and 300 parts by weight with respect to 100 parts by weight of the polymer base of the compound.

In the figure there is shown in a perspective view   a length of a cable according to the invention. As can be seen in this figure, the cable  comprises a conductor 1, for example, of copper or aluminium, around which there is disposed a covering 2 serving the simultaneous purposes of an insulation and of a sheath, which covering 2 is made of a compound according to the invention.

The covering 2 of the cable is made of a compound based on a copolymer, the monomers of which are ethylene and an ester containing a double bond, such as, for example: ethylene vinyl acetate.

Another fundamental element of said compound forming the covering 2 is the presence in said compound of magnesium hydroxide, and in particular, magnesium hydroxide comprised between 75 and 300 parts by weight with respect to 100 parts by weight of the polymer base.

A compound that is particularly suited for forming the covering 2 of a cable according to the invention has the composition given herebelow:

|  | PARTS BY WEIGHT |
| --- | --- |
| ETHYLENE VINYL ACETATE | 100 |
| MAGNESIUM HYDROXIDE | 170 |
| CARBOIMIDE | 3,8 |
| VINYL TRIMETHOXY ETHOXYSILANE | 1,8 |
| STEARIC ACID | 2,3 |
| 2-4 POLYMERIZED HYDROXY QUINOLINE | 1,5 |
| PARAFFIN WAX | 2,3 |
| DICUMYL PEROXIDE | 3 |

With the compound for coverings serving simultaneously as an insulation and a sheath for electric power cables, according to the invention (which is listed hereabove just by way of example), there have been carried out experimental tests for pointing out its behaviour as regards its effective capacities of preventing flame propagation, of emitting more or less transparent fumes during a fire, and moreover, for showing the dielectric characteristics of said material itself.

As far as concerns the insulations, the sheaths and the coverings that serve simultaneously as an insulation and a sheath of known cables, in the tests carried out, substantially identical compounds were used as in the above given composition (which forms a particular embodiment of the materials used according to the invention), except for one difference only in that the said magnesium hydroxide was replaced by an equal quantity of aluminium hydroxide.

TESTS FOR DETERMINING THE TRANSPARENCY OF THE FUMES

The tests for determining the transparency of the fumes were performed according to the STANDARD 258-1976, set up by the National Fire Protection Association (N.F.P.A.).

For carrying out theses tests, square shaped test pieces were prepared, having sides of 76,2 mm and a thickness of 3 mm, of materials used for insulations and sheaths of electric cables according to the present invention, and of materials used for the sheaths and insulations of known cables.

The thus prepared test pieces were introduced into a testing apparatus as the one described in the above cited N.F.P.A. STANDARD.

The testing apparatus comprised a gas tight sealed parallelepiped chamber, inside of which there was present a support for the test piece. In correspondence of said support there were present six small burners, the flames of which were obtained by combustion of an air and propane mixture.

Moreover, inside this tightly sealed parallelepiped chamber, there was also present a device apt for supplying radiant energy. Said device was constituted substantially by a ceramic tube, inside of which there was placed a resistance supplied with electric current.

Said parallelepiped chamber was provided on two of its facing walls with sheets transparent to light in such a way as to allow the passage of a luminous beam of light into the chamber itself. Consequently, opposite to one of said walls constituted by the sheets transparent to light, there was foreseen a source of light having a predetermined intensity. Whereas, in the correspondence of the other transparent to light wall of the parallelepiped chamber, there was present a photo meter apt for messuring the intensity of the light incident on it (after traversing the parallelepiped chamber) and the degree of intensity of said light is expressed as the "specific optical density" of what is contained in the chamber itself.

The performance of the various tests with the testing apparatus (briefly described above) was duly carried out according to the instructions set up by the STANDARD in question i.e. according to the following modalities. The test pieces were firstly dried for 24 hours at a temperature of 60°C, and then conditioned by placing them in an ambient having a room temperature of 23°C where the relative humidity was of 50%. After the above preliminary treatment the testing was commenced with each test piece being introduced into the parallelepiped chamber, with having the burners ignited and the device for supplying the radiant energy working. Through the photo meter the specific optical density of the fumes was noted, after 4 minutes from the start of the test. Also the maximum specific optical density of the fumes was noted. The average results of the tests are given in the Table here-below:

| | D4 | Dm | L.I.O. |
|---|---|---|---|
| Compound according to the invention used for conductor coverings serving both as insulation and sheath | 10 | 100 | 31 |
| Known compound used for conductor coverings serving both as insulation and sheath | 20 | 150 | 31 |

Where:

D4   is the specific optical density of the fumes, after 4 minutes from the start of the test.

Dm   is the maximum specific optical density of the fumes.

L.I.O.   is the so called oxygen index that represents the minimum quantity of oxygen, in a mixture of oxygen and azote, that is required for permitting the combustion of a test piece, as defined by STANDARD-ASTM2863.

FLAME PROPAGATION RESISTANCE TEST

The tests for determining the resistance to flame propagation in the materials for insulations and/or sheaths of electric cables, and for conductor coverings serving both as an insulation and a sheath, according to the invention, as compared to known types of electric cable sheaths and conductor coverings serving both as an insulation and a sheath, were carried out according to the following modalities set up in the STANDARD NF C32-070.

Test pieces were prepared of cables according to the invention and of known cables having a lenght of 1600 mm, a copper conductor, having a cross section of 2,5 mm$^2$, and a covering having a thickness of 1,2 mm.

A bundle of 70 cable lengths thus prepared was tied up together with iron wires and introduced into a testing cabin that was comprised of a parallelepiped shaped casing having a height of 2000 mm, a width of 600 mm, and a depth of 700 mm.

In the correspondence of the ceiling of the cabin, there was present an aspirator, while in correspondence of the lower part of the cabin, there were present air inlets. Inside the cabin, there was housed a metallic chimney into which the bundle of cable lengths to be tested was placed. Below the chimney, there were present two butane gas burners, which were adjustable in such a way as to cause their flames to result tangentially to the bundle of the cable lengths, in correspondece of the base of the latter.

Moreover, at the chimney base, there was present an electric furnace. Said electric furnace in question had a potential power gradient that was capable of causing the temperature of a black body inserted into the furnace to rise, with having a heating rate in °C/sec corresponding to the formula given herebelow:

$$\dot{T} = \frac{T_{35} - T_5}{30}$$

Where:

$\dot{T}$ must be comprised between 3,2 and 3,4 °C/sec.

$T_{35}$ is the furnace temperature, 35 sec. after starting time.

$T_5$ is the furnace temperature, 5 sec. after starting time.

After the bundle of cable lengths to be tested had been introduced into the testing cabin, the interior of the cabin itself was thermo regulated until a temperature of 15°C was reached. Next, the two burners were ignited, and the furnace was positioned in correspondence of the lower extremities of the test pieces after the furnace itself had reached a temperature comprised between 750°C and 900°C. The fan of the aspirator was also switched on so as to cause a stream of air having a rate of 120 m/min approx. Under these above given conditions, the duration of the test was about 30 minutes, after which the burners and the electric furnace were switched off.

The results obtained from the tests carried out, are as follows:

With the known materials for insulations and cable sheaths, and with the known conductor coverings serving both as an insulation and a sheath, after 4 (four) minutes from the starting time of the test, the whole bundle of cable lengths was found to be entirely burnt.

With the materials of the invention for insulations and cable sheaths and for conductor coverings serving both as an insulation and a sheath, at the end of the test carried out, it was found that only a 20 cm tract of the whole bundle of cable lengths resulted as being burnt.

TESTS FOR DETERMINING THE DIELECTRIC PROPERTIES

These tests were performed for determining the values of the insulation constant $K_i$ for the materials forming insulations  and cable sheaths and conductor coverings serving both as an insulation and a sheath, namely in the case of materials according to the invention, and of known materials.

The tests were performed according to the CEI STANDARDS 2019, that foresee the immersion of 5 meter long cable lengths into a container full of water, with applying a D.C. voltage comprised between 300-500 Volts between each cable and the water which, in particular, has a temperature of 20°C. Thereafter the resistance of the insulation is measured, after 1 minute from the application of the voltage.

The results obtained from this test are given in the table herebelow:

|  | Ki |
|---|---|
| Compound according to the invention used for conductor coverings serving both as insulation and sheath | 100 M $\Omega$/Km |
| Known compounds used for a conductor covering serving both as insulation and sheath | 1 M $\Omega$/Km |

Where:

Ki   is the insulation constant.

From examining the tests carried out it can be seen clearly that, with the materials for cable insulations, for cable sheaths, and for the conductor coverings serving both as an insulation and a sheath, according to the invention, and with the electric cables, according to the invention, the proposed aims are achieved.

In fact, as far as concerns the capacity of producing transparent furmes in case of a fire, there is noted a considerable increase of about 50% of the transparency obtained with the materials according to the invention with respect to the known materials and the known cables.

Moreover, as far as concerns the capacity for preventing flame propagation in case of a fire, in the case of the cables provided with insulations andsheaths according to the invention, the improvement obtained results as being extremely efficacious.

Probably, one explanation of the causes on the basis of which it is made possible to obtain such exceptional improvements in the property for resisting the propagation of flames, can be found in the particular characteristic of the magnesium hydroxide used in combination with the particular type of polymer base of the compound itself.

In fact, said magnesium hydroxide presents with respect to aluminium hydroxide, which is the known charge to be added to compounds for forming insulations and electric cable sheaths whenever a resistance to flame propagation is desired, apart from thetransparency in the fumes emitted, also a considerably  higher decomposition temperature.

In fact,the temperature of decomposition, i.e. the temperature at which aluminium hydroxide becomes transformed into a aluminium oxide with liberating water and absorbing heat, ranges between 200/250°C, whereas the temperature of decomposition for the magnesium hydroxide, that gives place to the formation of magnesium oxide and water with the absorption of heat, ranges between 350/400°C, i.e. it is a considerably higher temperature with respect to that required  for the decomposition of aluminium hydroxide.

Furthermore, the pyrolysis of the polymer base of the compound according to the invention takes place at a temperature which is the temperature of decomposition of the magnesium hydroxide. Hence, theses two reactions take place practically simultaneously with thus impeding any combustion taking place, in a way that is more efficacious.

Moreover, as far as concerns the improvements obtained in the dielectric properties of a cable obtainable with the materials used for insulations and sheaths, and conductor coverings according to the present invention with respect to known materials, an explanation for this can be found in the fact that the magnesium hydroxide is a charge that is less polar than aluminium hydroxide, and a reduction in polarity of the material forming the insulation and a sheath, acts in the sense of enhancing the dielectric properties of the latter.

Although there has been illustrated and described here one particular form of realization according to the present invention, what must also be intended as comprised within its ambit, are all those possible alternative variations that are available to a technician of the field.

C L A I M S:

1.    Material for insulations and sheaths of electric cables, and for conductor coverings that serve both as an insulation and a sheath, characterized by the fact of comprising a compound based on a copolymer, the monomers of which are ethylene and an ester containing at least one double bond, in which compound there is present magnesium hydroxide as one component thereof.

2.    Material according to claim 1, characterized by the fact that the magnesium hydroxide is present in a quantity comprised between 75 and 300 parts by weight with respect to 100 parts by weight of the polymer base.

3.    Material according to claim 1, characterized by the fact that the copolymer base of the compound is ethylene vinyl acetate.

4.    Material according to claims 1 and 2, characterized by the fact that the compound that constitutes it, has the following composition:

| ETHYLENE VINYL ACETATE | 100 parts by weight |
| MAGNESIUM HYDROXIDE | 170 " " " |
| CARBO  IMIDE | 3,8 " " " |
| VINYL TRIMETHOXY ETHOXYSILANE | 1,8 " " " |
| STEARIC ACID | 2,3 " " " |
| 2-4 POLYMERIZED HYDROXY QUINOLINE | 1,5 " " " |
| PARAFFIN WAX | 2,3 " " " |
| DICUMYL PEROXIDE | 3 " " " |

5.    Electric cable comprising a conductor and at least one insulation or a covering serving as an insulation and a sheath, characterized by the fact that said insulation or covering is a copolymer base compound, the monomers of which are ethylene and an ester containing a double bond, that compound containing magnesium hydroxide as one component thereof.

6.    Electric cable according to claim 5, characterized by the fact of comprising a sheath constituted by a compound having a copolymer base, the monomers of which are ethylene and an ester containing at least one double bond, that compound containing magnesium hydroxide as one component thereof.

7.    Electric cable according to claims 5 and 6, characterized by the fact that the magnesium hydroxide in the compound is present in a quantity comprised between 75 and 300 parts by weight with respect to 100 parts by weight of the base polymer of the compound.

0103121

1/1

2

1

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 450 851 (GENERAL ELECTRIC) | | H 01 B 3/44<br>C 08 L 23/08 |
| | --- | | |
| A | CHEMICAL ABSTRACTS, vol. 82, no. 2, 13th January 1975, page 30, no. 5009n, Columbus, Ohio, US & JP - A - 74 13 616 (MITSUBISHI PETROCHEMICAL CO., LTD.) 02-04-1974 | | |
| | --- | | |
| A | CHEMICAL ABSTRACTS, vol. 93, no. 4, 28th July 1980, page 40, no. 27350w, Columbus, Ohio, US & JP - A - 80 34 226 (FURUKAWA ELECTRIC CO., LTD.) 10-03-1980 | | |
| | --- | | |
| A | CHEMICAL ABSTRACTS, vol. 91, no. 22, 26th November 1979, page 33, no. 176197n, Columbus, Ohio, US & JP - A - 79 77 658 (MITSUBISHI PETROCHEMICAL CO., LTD.) 21-06-1979 | | TECHNICAL FIELDS SEARCHED (Int. Cl. 3)<br><br>H 01 B 3/00<br>C 08 L 23/00 |
| | --- | | |
| A | CHEMICAL ABSTRACTS, vol. 90, no. 22, 28th May 1979, page 51, no. 169670n, Columbus, Ohio, US & JP - A 78 147 745 (SHOWA ELEC-TRIC WIRE AND CABLE CO., LTD.) 22-12-1978 | | |
| | ----- | | |

The present search report has been drawn up for all claims

| Place of search | Date of completion of the search | Examiner |
|---|---|---|
| THE HAGUE | 18-11-1983 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82